# EUROPÄISCHE PATENTANMELDUNG

(11) **EP 1 283 455 A1**
(43) Veröffentlichungstag der Anmeldung: **12.02.2003**
(21) Anmeldenummer: 01118914.9
(22) Anmeldetag: 03.08.2001
(51) Int. Cl.: G05B 19/048, G05B 19/406

(54) **Vorrichtung zur Instandhaltung einer technischen Anlage mit einer Anzahl von Hard- und/oder Software-Komponenten**

(71) Anmelder: SIEMENS AKTIENGESELLSCHAFT, 80333 München (DE)
(72) Erfinder: Soellner, Siegfried, 91054 Erlangen (DE)

(57) **Zusammenfassung**

Bei einer erfindungsgemäßen Vorrichtung (1) ist eine Verarbeitungseinheit (5) vorgesehen, welche ertüchtigt ist, aus den in einer Konfigurationsdatei (10) gespeicherten Informationen, welche die Hard- und/oder Softwarekomponenten (K) der technischen Anlage hinsichtlich ihres Typs (X,Y,Z) und Verwendungsortes (A,B,C) innerhalb der technischen Anlage identifizieren, eine Bestandsliste (20) automatisch zu ermitteln, welche jeden Typ (X,Y,Z) der Hard- und Softwarekomponenten (K) genau einmal enthält. In vorteilhaften Ausführungsbeispielen wird die Bestandsliste (20) mit einer Katalogliste (CL) verglichen und eine Soll-Bestandsliste (35) ermittelt, sowie eine Soll-Konfigurationsdatei (40) erzeugt.

## Beschreibung

Die Erfindung betrifft eine Vorrichtung zur Instandhaltung einer technischen Anlage.

Ein leittechnisches System einer technischen Anlage, insbesondere einer Kraftwerksanlage, besteht im Allgemeinen aus einer Vielzahl von Hardware- und zugehörigen Software-Komponenten, welche nicht selten im Verlauf mehrerer Jahre zu einem System zusammengefügt wurden.

Bei solch einem heterogenen System ist nur sehr schwer sicherzustellen, dass die verwendeten Hard- und/oder Software-Komponenten einen jeweils aktuellen Ausgabestand aufweisen, so dass die technische Anlage im Falle eines Defekts oder einer Störung keinesfalls zügig mit passenden, aktuell erhältlichen Ersatzteilen und/oder Software-Programmen wieder in Stand gesetzt werden kann. Bedingt durch die mittlerweile immer kürzer werdenden Innovationszyklen von Hard- und/oder Software können z.B. in der Zwischenzeit für eine Hardund/oder Software-Komponente der technischen Anlage mehrere Versionen (Ausgabestände) auf dem Markt erschienen sein, so dass die ursprünglich in der technischen Anlage eingesetzte Version einer Komponente zu der aktuell erhältlichen Version der Komponente unter Umständen nicht mehr kompatibel ist.

Zum Erhalt der Funktionsfähigkeit einer technischen Anlage, aber auch, um die technische Anlage an die sich verändernden Anforderungen im Laufe der Zeit anzupassen, empfiehlt es sich, die Ausgabestände der Hard- und/oder Software-Komponenten der technischen Anlage im Laufe des im Allgemeinen mehrjährigen Betriebs laufend an die jeweils erhältlichen aktuellen Ausgabestände anzupassen.

So ist insbesondere sichergestellt, dass bei einer Störung trotz der genannten kurzen Innovationszyklen ein passendes Ersatzteil und/oder Ersatzsoftware-Programm erhältlich ist, welches zu einem defekten Bauteil kompatibel ist; würde man auf das genannte "Upgrade" der technischen Anlage verzichten, kann es sein, dass in einem Fehlerfall sogar ein komplettes Teilsystem durch ein moderneres Teilsystem unter hohem Kostenaufwand ersetzt werden muss, da der Ersatz eines einzelnen defekten Teils nicht mehr möglich ist, weil eine inzwischen erhältliche aktuelle Version des defekten Teils nicht mehr kompatibel ist zu einer vor mehreren Innovationszyklen eingesetzten ursprünglichen Version dieses Teils.

Die dadurch entstehenden Ausfallzeiten der technischen Anlage inklusive ihres leittechnischen Systems, mit welchem die Anlage gesteuert ist, sind enorm kostspielig (Produktionsausfall, entgangener Gewinn etc.).

Bisher wurde einer derartigen "vorbeugenden Wartung/Instandsetzung" keine besondere Beachtung geschenkt; bei der Projektierung der technischen Anlage einschließlich ihres Leitsystems werden Schaltbücher sowie Hard- und Software-Pläne erstellt, welche unter anderem den geplanten Ausgabestand der Komponenten zum Zeitpunkt der Ausführung des Werks dokumentieren. Eine Revision dieser Pläne findet statt, wenn die Anlage in Betrieb geht ("as build"-Revision), oder wenn ein Teil infolge eines Defekts oder eines Umbaus ausgetauscht wird.

Der Zustand dieser Pläne ist also auf den letzten Funktionsfähigen Zustand der technischen Anlage "eingefroren" und dient unter anderem dazu, im Fehlerfall die eingesetzte Version einer defekten Komponente zu identifizieren. Dies führt dann, wenn die defekte Komponente ein gewisses Alter überschritten hat und/oder zu viele Innovationszyklen inzwischen vergangen sind, zu den genannten Problemen.

Im Firmenprospekt "Service für Leittechnik im Kraftwerk", Siemens AG, 1999, wird auf das Problem des Verschleißes bei Elektronik und Software hingewiesen; der Verschleiß wird dabei unter anderem definiert als das Veraltern einer eingesetzten Version einer Anlagenkomponente.

Außer dem bekannten Vorgehen, die Ausgabestände/Versionen der Anlagenkomponenten manuell zu erfassen und manuell zu pflegen, ist keine weitere Strategie bekannt.

Der Erfindung liegt daher die Aufgabe zugrunde, eine Vorrichtung zur Instandhaltung einer technischen Anlage mit einer Anzahl von Hard- und/oder Software-Komponenten anzugeben, welche die genannten Nachteile überwindet und mit welcher es insbesondere ermöglicht ist, die Ausgabestände/Versionen der Anlagenkomponenten auf einem aktuellen Stand zu halten.

Die Aufgabe wird erfindungsgemäß durch eine Vorrichtung zur Instandhaltung einer technischen Anlage mit einer Anzahl von Hard- und/oder Software-Komponenten gelöst, wobei eine Verarbeitungseinheit vorgesehen ist, welche ertüchtigt ist, aus den in einer Konfigurationsdatei gespeicherten Informationen, welche die Hard- und/oder Software-Komponenten hinsichtlich ihres Typs und Verwendungsortes innerhalb der technischen Anlage identifizieren, eine Bestandsliste automatisch zu ermitteln, welche jeden Typ der Hard- und/oder Software-Komponenten genau einmal enthält.

Der Typ einer Hard- und/oder Software-Komponente umfasst dabei die Version/den Ausgabestand der jeweiligen Komponente.

Die Erfindung geht dabei von der Überlegung aus, dass zu den meisten technischen Anlagen eine Konfigurationsdatei existiert, in welcher die Zusammenschaltung der verschiedenen Anlagenkomponenten sowie deren Typ und deren Verwendungsort (beispielsweise der physikalische Installationsort oder die Angabe der Funktion, für welche eine Anlagenkomponente eingesetzt ist), festgehalten sind. Im einfachsten Fall kann es sich dabei um eine Zusammenstellung auf Papier handeln, es ist jedoch auch denkbar, dass die Konfigurationsdatei einem gegebenenfalls vorhandenen Engineering- oder Zeitrechner der technischen Anlage entnommen wird, wobei sich in einem derartigen Rechner oftmals elektronisch abgespeichert ein Abbild der technischen Anlage und/oder deren Leitsystems mit den einzelnen Hard- und Software-Komponenten befindet. Dabei sind die Anlagenkomponenten eindeutig identifiziert, beispielsweise durch die Zuordnung einer Bestellnummer, mit deren Hilfe der jeweilige Ausgabestand/Version (Typ) der jeweiligen Anlagenkomponente ermittelbar ist.

Die technische Anlage kann selbstverständlich an mehreren Verwendungsorten Anlagenkomponenten gleichen Typs (z.B. Einoder Ausgabekarten einer SPS, mehrere gleichartige Rechner für verschiedene Funktionen oder mehrere gleichartige Software-Programme, wie Betriebssysteme oder Regelalgorithmen für verschiedene Verwendungen) enthalten. Dies bedeutet, dass in der Konfigurationsdatei Anlagenkomponenten gleichen Typs mehrfach, üblicherweise sogar vielfach, an verschiedenen Verwendungsorten enthalten sind.

Gemäß der Erfindung ermittelt die Verarbeitungseinheit aus der Konfigurationsdatei eine Bestandsliste, die jeden Typ einer Anlagenkomponente nur noch genau einmal enthält; so ist eine Übersicht darüber generiert, welche verschiedenen Typen von Anlagenkomponenten in der technischen Anlage eingesetzt sind. Dabei ist zunächst nicht von Belang, in welcher Stückzahl und an welchem Verwendungsort die Typen eingesetzt sind.

Die Verarbeitungseinheit kann, wenn die Konfigurationsdatei elektronisch vorliegt, z.B. mittels eines Bussystems mit dem Engineering- oder Zeitrechner verbunden sein und die Konfigurationsdatei unter Verwendung des Bussystems einlesen. Die Konfigurationsdatei kann z.B. aufgebaut sein aus tabellarischen Datensätzen, welche jeweils mindestens den Typ und den Verwendungsort einer Anlagenkomponente umfassen.

Falls bei einer technischen Anlage eine derartige, elektronische Konfigurationsdatei nicht vorliegt, so ist diese einmal manuell zu erstellen, beispielsweise durch Übertragung der Datensätze einer Papier-Liste in die Datensätze eines Datenbank-Programms.

Die von der Verarbeitungseinheit automatisch generierte Bestandsliste gibt also an, welche Anlagenkomponenten mit welchem Ausgabestand (Typ) in der technischen Anlage verwendet sind; im sehr wahrscheinlichen Fall der Verwendung gleichartiger Typen an mehreren unterschiedlichen Verwendungsorten ist dabei jeder Typ nur genau einmal aufgeführt.

Vorteilhaft ist die Verarbeitungseinheit ertüchtigt, eine Katalogliste, welche Katalog-Typen enthält, automatisch einzulesen, die Bestandsliste mit der Katalogliste zu vergleichen und diejenigen Typen in der Bestandsliste zu markieren, welche jeweils einem der Katalog-Typen entsprechen, mit letzteren aber nicht identisch sind.

In dieser vorteilhaften Ausgestaltung der Erfindung kann die Verarbeitungseinheit die Bestandsliste mit der Katalogliste vergleichen, um insbesondere diejenigen Typen festzustellen, für die zwischenzeitlich ein neuerer Ausgabestand/Version erhältlich ist. Die Katalogliste kann dabei z.B. ein auf CD-ROM erhältlicher Katalog eines Zulieferers sein, welcher Anlagenkomponenten herstellt. Der Katalog enthält dann beispielsweise die aktuellen Ausgabestände/Versionen (Katalog-Typen) von Anlagenkomponenten. Der Katalog kann Katalog-Typen enthalten, welche Typen innerhalb der technischen Anlage ersetzen können, wobei die Katalog-Typen identisch mit den Typen sein können, sich aber auch von diesen unterscheiden können. Katalog-Typen und Typen entsprechen sich dann, wenn der Ersatz eines Typs durch einen Katalog-Typ die dem Typ zugedachte Funktion mindestens aufrechterhält, gegebenenfalls sogar verbessert.

Der Vergleich der Bestandsliste mit der Katalogliste geschieht am besten in festen Zeitabständen, so dass die Typen der technischen Anlage möglichst aktuell gehalten werden können.

Das Einlesen der Katalogliste kann z.B. auch über das Internet geschehen. In dieser Ausgestaltung der Erfindung erstellt die Verarbeitungseinheit aus der Bestandsliste, beispielsweise durch gezielte Suche nach den in der technischen Anlage verwendeten Anlagenkomponenten in der Katalogliste, einem Vergleich zwischen beiden Listen eine markierte Bestandsliste, aus welcher diejenigen Typen der Anlagenkomponenten ersichtlich sind, für welche ein entsprechender Katalog-Typ erhältlich ist, der beispielsweise ein "Upgrade" des Typs einer Anlagenkomponente darstellt.

In weiterer vorteilhafter Ausgestaltung der Erfindung ist die Verarbeitungseinheit ertüchtigt, automatisch aus der Bestandsliste, den markierten Typen und den Katalog-Typen eine Soll-Bestandsliste zu ermitteln, in welcher den markierten Typen die jeweils entsprechenden Katalog-Typen zugeordnet sind.

Die Soll-Bestandsliste gibt Auskunft darüber, welche Typen der aktuellen Anlagenkonfiguration durch welchen Katalog-Typ vorteilhaft zu ersetzen sind; da die Katalogliste üblicherweise aktuelle Katalog-Typen enthält, die in Bezug auf ihren Ausgabestand / Version moderner sind als die entsprechenden Typen der Anlagenkonfiguration, kann die Soll-Bestandsliste dazu dienen, die Anlagenkonfiguration zu modernisieren und dadurch instand zu halten. Es ist auch denkbar, dass die Soll-Bestandsliste automatisch, z.B. auch mittels der Verarbeitungseinheit über das Internet, an den Herausgeber des Katalogs als Bestellung verschickt wird. Dazu ist es dann erforderlich, auch die zugehörigen benötigten Stückzahlen aus der Konfigurationsdatei zu ermitteln.

Besonders vorteilhaft ist die Verarbeitungseinheit weiterhin ertüchtigt, aus der Soll-Bestandsliste und der Konfigurationsdatei automatisch eine Soll-Konfigurationsdatei zu ermitteln, in welcher mindestens diejenigen Hard- und/oder Softwarekomponenten, deren Typ markiert ist, hinsichtlich ihres Typs, ihres entsprechenden Katalogtyps und ihres Verwendungsortes innerhalb der technischen Anlage identifiziert sind.

Die Soll-Konfigurationsdatei entspricht dabei einer modernen Version der (ursprünglichen) Konfigurationsdatei, wobei die Typen (Ausgabestände / Versionen) von Komponenten der technischen Anlage um entsprechende moderne Katalog-Typen ergänzt sind (insofern ein entsprechender Katalog-Typ existiert; ansonsten bleiben die ursprünglichen Typen erhalten).

Im Vergleich zur Soll-Bestandsliste enthält die Soll-Konfigurationsdatei zusätzliche Informationen, wie z.B. den Verwendungsort, an dem die entsprechenden Katalog-Typen einzusetzen sind; es ist dabei selbstverständlich möglich, dass ein Katalog-Typ an verschiedenen Verwendungsorten in verschiedenen Stückzahlen einzusetzen ist (die entsprechenden Verwendungsorte und benötigten Stückzahlen sind in der Konfigurationsdatei gespeichert). Aus der Kombination der in der Konfigurationsdatei und der Soll-Bestandsliste enthaltenen Informationen ist die Soll-Konfigurationsdatei leicht zu ermitteln.

Die Soll-Konfigurationsdatei kann von der Verarbeitungseinheit z.B. an einen Leitrechner oder ein Betriebsführungssystem der technischen Anlage übermittelt werden, welche dann beispielsweise für das Wartungspersonal eine Meldung erzeugen, dass eine Hochrüstung (Upgrade) von Anlagenkomponenten auf einen neueren, modernen Ausgabestand angezeigt ist. Das Wartungspersonal kann sich dann z.B. die Soll-Konfigurationsdatei als Liste ausdrucken lassen und die aufgeführten Typen am aufgeführten Verwendungsort durch die aufgeführten Katalog-Typen ersetzen.

Im Falle von hochzurüstenden Software-Komponenten, kann das Upgrade auch - zumindest teilweise - automatisch ablaufen: mittels der Soll-Bestandsliste und den benötigten Stückzahlen werden die hochzurüstenden Software-Komponenten bei einem Hersteller vorteilhaft automatisch (z.B. per eMail) in den benötigten Stückzahlen durch die Verarbeitungseinheit bestellt und von diesem z.B. per eMail oder bereitgestelltem Internet-Download geliefert. Mittels der Soll-Konfigurationsdatei kann der Leitrechner diejenigen Zielsysteme ermitteln, welche von dem Upgrade betroffen sind und die "Software-Up-grades" an diese Zielsysteme, z.B. über ein Bussystem, übermitteln und die Installation anstoßen.

Außerdem kann der Leitrechner eine Reihe von in diesem gespeicherten Projektierungsinformationen, welche die Konfiguration der technischen Anlage betreffen, mittels der Soll-Konfigurationsdatei automatisch aktualisieren.

Der Gegenstand der Erfindung trägt dazu bei, eine technische Anlage mit einer Anzahl an Hard- und/oder Softwarekomponenten laufend auf einem modernen Stand zu halten, so dass eine Überalterung verhindert ist. Insbesondere ist dadurch die technische Anlage besonders einfach an sich verändernde Anforderungen und neue Funktionen anpassbar. Außerdem ist im Falle eines Fehlers einer Anlagenkomponente die Wahrscheinlichkeit maximiert, dass für einen defekten Typ ein kompatibler Ersatz erhältlich ist, da - wenn die Instandhaltung laufend, z.B. mittels der Soll-Konfigurationsdatei, vorgenommen wird - ein defekter Typ im Vergleich zum entsprechenden Katalog-Typ nicht um mehrere Innovationszyklen "hinterher hinkt"; im Idealfall ist sogar (noch) ein identischer Typ als Katalog-Typ erhältlich.

Auch im Bereich der Universal-Rechner, insbesondere PCs, kann der Gegenstand der Erfindung vorteilhaft benutzt werden: Ein Benutzer erstellt eine Konfigurationsdatei und eine Bestandsliste, welche die in seinem Rechner eingesetzten Hard- und Softwarekomponenten enthält; diese Informationen können eventuell zum Teil automatisch generiert oder aus den im Betriebssystem gespeicherten Einstellungs- und Konfigurationsparametern gewonnen werden.

Ein Service-Programm, welches einen wesentlichen Gegenstand der Erfindung realisiert, ist auf dem Rechner installiert und liest z.B. über das Internet einen Hersteller-Katalog ein. Das Programm ermittelt durch einen Vergleich der Bestandsliste mit dem Hersteller-Katalog (Katalog-Liste) eine Soll-Bestandsliste und ggf. eine Soll-Konfigurationsdatei und gibt diese dem Benutzer aus. So ist der Benutzer jederzeit in der Lage, seinen Rechner auf einem modernen Stand zu halten und gezielt diejenigen Komponenten zu ersetzen, welche zwischenzeitlich veraltert sind.

Im Folgenden ist ein Ausführungsbeispiel der Erfindung näher dargestellt.

Es zeigt:
- FIG: eine Instandhaltungsvorrichtung nach der Erfindung

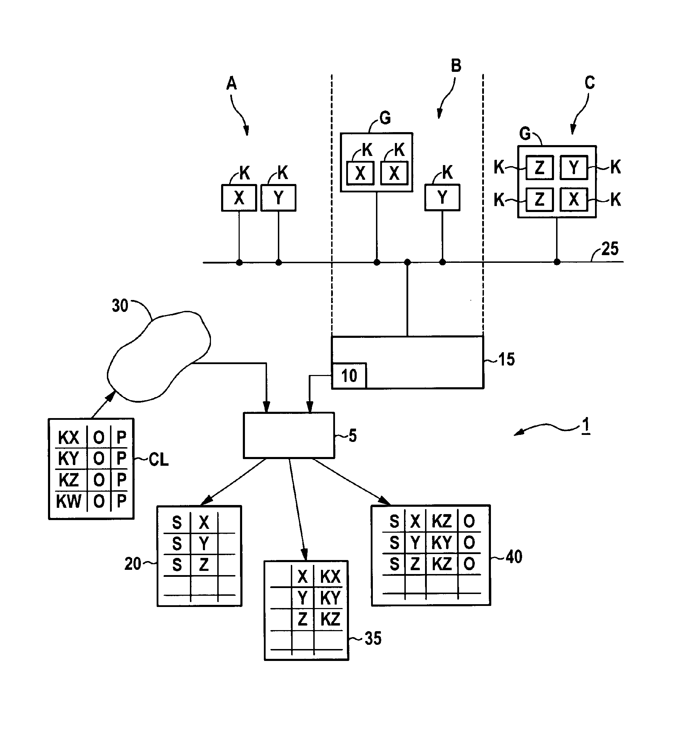

In der Figur ist eine Vorrichtung 1 zur Instandhaltung einer technischen Anlage mit einer Anzahl von Hard- und Softwarekomponenten K dargestellt. In der gezeigten Ausführungsform sind die Anlagenkomponenten K über ein Bussystem 25 zur wechselseitigen Kommunikation sowie mit einem Leitrechner 15 verbunden. Im Leitrechner 15 ist eine Konfigurationsdatei 10 gespeichert, welche den Aufbau der technischen Anlage mit ihren Anlagenkomponenten K und deren jeweiligem Verwendungsort A, B, C widerspiegelt. Der Verwendungsort kann dabei beispielsweise ein Installationsort und/oder eine Funktion der technischen Anlage sein.

Die Anlagenkomponenten sind jeweils von einem Typ X, Y, Z. Komplexere Teile der technischen Anlage, welche mehrere Anlagenkomponenten K von Typen X,Y,Z umfassen, werden als Geräte G bezeichnet. Beispielsweise ist eine Speicherprogrammierbare Steuerung (SPS) ein Gerät G, wobei die Digitaleingabekarten der SPS eine Anlagenkomponente K des Typs X, die Analogausgabekarten der SPS eine Anlagenkomponente K des Typs Y und die CPU der SPS eine Anlagenkomponente K des Typs Z ist.

Die Vorrichtung 1 umfasst eine Verarbeitungseinheit 5, welche die in der Konfigurationsdatei 10 gespeicherten Informationen einliest und daraus eine Bestandsliste 20 ermittelt. Die Bestandsliste 20 enthält mindestens die Typen X, Y, Z von Anlagenkomponenten K, welche in der technischen Anlage verwendet sind. Dabei ist jeder in der technischen Anlage verwendete Typ X, Y, Z genau einmal aufgeführt, selbst wenn ein gleichartiger Typ X, Y, Z an mehreren Verwendungsorten A, B, C und/oder an einem Verwendungsort mehrfach verwendet ist. Daneben können in der Bestandsliste 20 auch Stückzahldaten S der Typen X, Y, Z aufgeführt sein.

Die Verarbeitungseinheit 5 liest weiterhin eine Katalogliste CL ein, mit welcher die Bestandsliste 20 verglichen wird. Bei der Katalogliste kann es sich zum Beispiel um einen Herstellerkatalog auf CD-ROM handeln oder, wie in der Figur angedeutet, um einen Software-Download der Katalogliste CL von der Homepage eines Herstellers von Anlagenkomponenten über das Internet 30 in die Verarbeitungseinheit 5.

In der Katalogliste CL sind Katalog-Typen KX, KY, KZ, KW von Anlagenkomponenten K aufgeführt. Es können dabei in der Katalogliste CL Katalog-Typen KX, KY, KZ enthalten sein, welche zu Typen X, Y, Z von Komponenten K der technischen kompatibel sind und diese ersetzen können, aber nicht mit letzteren identisch sind (z.B. weil die Katalog-Typen KX, KY, KZ moderne Nachfolger der Typen X, Y, Z sind). Ist dies der Fall, so markiert die Verarbeitungseinheit 5 in der Bestandsliste 20 die genannten Typen X, Y, Z (in der Katalogliste CL können zu den Katalog-Typen KX, KY, KZ, KW auch zugehörige Bestell-O und Preisdaten P angegeben sein).

Die Verarbeitungseinheit 5 ermittelt weiterhin aus der Bestandsliste 20, den markierten Typen X , Y, Z und den Katalog-Typen KX, KY, KZ, KW eine Soll-Bestandsliste 35, in welcher mindestens den markierten Typen X, Y, Z die jeweils entsprechenden Katalog-Typen KX, KY, KZ zugeordnet sind; den entsprechenden Katalog-Typen KX, KY, KZ können dabei zusätzlich die Stückzahldaten S zugeordnet sein, so dass die Soll-Bestandsliste 35 als eine Grundlage zur Bestellung der entsprechenden Katalog-Typen KX, KY, KZ bei einem Hersteller verwendet werden kann.

Um die in der Konfigurationsdatei 10 gespeicherte (ursprüngliche) Konfiguration der Anlagenkomponenten K der technischen Anlage mit den entsprechenden Stückzahldaten S und Verwendungsorten A, B, C modernisieren zu können, ermittelt die Verarbeitungseinheit 5 außerdem aus der Soll-Bestandsliste 20 und der Konfigurationsdatei 10 automatisch eine Soll-Konfigurationsdatei 40, in welcher mindestens diejenigen Hardund/oder Softwarekomponenten K, deren Typ X, Y, Z markiert ist, hinsichtlich ihres Typs X,Y, Z, ihres entsprechenden Katalog-Typs KX, KY, KZ und ihres Verwendungsortes A, B, C innerhalb der technischen Anlage identifiziert sind.

Aus der Soll-Konfigurationsdatei 40 geht dann hervor, an welchem Verwendungsort A, B, C Anlagenkomponenten X, Y, Z durch entsprechende, moderne Katalog-Typen KX, KY, KZ vorteilhaft ersetzt werden können bzw. sollten.

Die Soll-Konfigurationsdatei 40 kann z.B. vom Instandhaltungspersonal verwendet werden, um zielgerichtet die betroffenen Anlagenkomponenten K zu modernisieren; es ist auch denkbar, falls es sich bei den Typen X, Y, Z der Anlagenkomponenten K um zu modernisierende Software-Komponenten handelt, dass die Modernisierung zumindest teilweise automatisch ablaufen kann: Die Soll-Bestandsliste 35 wird z.B. als Bestellung per eMail an einen Hersteller geschickt, dieser liefert die (Software)Katalog-Typen über das Internet und der Leitrechner nimmt automatisch - so weit wie möglich - mit Hilfe der Soll-Konfigurationsdatei 40 und den gelieferten (Software)Katalogtypen die Modernisierung vor (z.B. mittels automatischer Installation der gelieferten Katalog-Typen).

## Patentansprüche

1. Vorrichtung (1) zur Instandhaltung einer technischen Anlage mit einer Anzahl von Hard- und/oder Softwarekomponenten (K),
**gekennzeichnet durch** eine Verarbeitungseinheit (5), welche ertüchtigt ist, aus den in einer Konfigurationsdatei (10) gespeicherten Informationen, welche die Hardund/oder Softwarekomponenten (K) hinsichtlich ihres Typs (X,Y,Z) und Verwendungsortes (A,B,C) innerhalb der technischen Anlage identifizieren, eine Bestandsliste (20) automatisch zu ermitteln, welche jeden Typ (X,Y,Z) der Hardund/oder Softwarekomponenten (K) genau einmal enthält.

2. Vorrichtung (1) nach Anspruch 1,
**dadurch gekennzeichnet ,dass** die Verarbeitungseinheit (5) ertüchtigt ist, eine Katalogliste (CL), welche Katalog-Typen (KX,KY,KZ) enthält, automatisch einzulesen, die Bestandsliste (20) mit der Katalogliste (CL) zu vergleichen und diejenigen Typen (X,Y,Z) in der Bestandsliste (20) zu markieren, welche jeweils einem der Katalog-Typen (KX,KY,KZ,KW) entsprechen, mit letzteren aber nicht identisch sind.

3. Vorrichtung (1) nach Anspruch 2,
**dadurch gekennzeichnet ,dass** die Verarbeitungseinheit (5) ertüchtigt ist, automatisch aus der Bestandsliste (20), den markierten Typen (X,Y,Z) und den Katalog-Typen (KX,KY,KZ,KW) eine Soll-Bestandsliste (35) zu ermitteln, in welcher den markierten Typen (X,Y,Z) die jeweils entsprechenden Katalog-Typen (KX,KY,KZ) zugeordnet sind.

4. Vorrichtung (1) nach Anspruch 3,
**dadurch gekennzeichnet ,dass** die Verarbeitungseinheit (5) ertüchtigt ist, aus der Soll-Bestandsliste (35) und der Konfigurationsdatei (10) automatisch eine Soll-Konfigurationsdatei (40) zu ermitteln, in welcher mindestens diejenigen Hard- und/oder Softwarekomponenten (K), deren Typ (X,Y,Z) markiert ist, hinsichtlich ihres Typs (X,Y,Z), ihres entsprechenden Katalog-Typs (KX,KY,KZ) und ihres Verwendungsortes (A,B,C) innerhalb der technischen Anlage identifiziert sind.
